# EUROPEAN PATENT APPLICATION

(11) **EP 4 629 556 A1**
(43) Date of publication of application: **08.10.2025**
(21) Application number: 23905837.3
(22) Date of filing: 15.12.2023
(51) Int. Cl.: H04L 9/08

(54) **IDENTIFIER PROCESSING METHOD AND DEVICE, AND COMPUTER-READABLE STORAGE MEDIUM**

(30) Priority: 21.12.2022 CN 202211655203
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: TIAN, Ye, Beijing 100053 (CN); BAI, Jie, Beijing 100053 (CN); MA, Jie, Beijing 100053 (CN); SU, Li, Beijing 100053 (CN); DU, Haitao, Beijing 100053 (CN)
(74) Representative: Hertin und Partner Rechts- und Patentanwälte PartG mbB
(86) International application number: PCT/CN2023/139172
(87) International publication number: WO 2024/131673

(57) **Abstract**

The present disclosure provides an identifier processing method and device and a computer readable storage medium. The method includes: receiving, by a first device, a first message transmitted by a User Equipment (UE), wherein the first message carries a first identifier; if a first key is not found according to the first identifier, transmitting, by the first device, a second message to a second device to obtain the first key; and/or, if the first key is found according to the first identifier, transmitting, by the first device, a third message to a third device. The present disclosure can indirectly determine a stage at which a current process is located according to whether the first key is found, prevent a service authorization operation at a certain stage from being bypassed, and enhance security of an enhanced GBA system and/or AKMA system. Further, the present disclosure can avoid an enhanced GBA service process and/or AKMA service process from being terminated abnormally.

## Description

### CROSS-REFERENCE TO RELATED APPLICATION

The present disclosure is filed based on and claims the priority of Chinese Patent Application No. 202211655203.5 filed on December 21, 2022, the disclosure of which are incorporated in their entireties by reference herein.

### TECHNICAL FIELD

The present disclosure relates to the field of communication technologies, and in particular to an identifier processing method and device and a computer readable storage medium.

### BACKGROUND

Generic Bootstrapping Architecture (GBA) is a 4G or 5G network root key-based generic authentication architecture. By using a standard authentication and key agreement mechanism, the GBA may achieve two-way identity authentication and key sharing between a terminal and a network.

In an enhanced GBA system, a Network Application Function (NAF) network element or an Authentication Proxy (AP) network element is deployed on an operator's network side, and provides services for multiple Application Servers (AS). While performing identity authentication for a User Equipment (UE), the NAF or AP further needs to authorize a service request of the UE. In a case where the service request of UE is authorized, the NAF or AP will generate a one-time GBA application layer session key Ks_NAF* for this session between the UE and an application server and provide the same to the application server for use, so that the application server is informed that this service request of the UE has been authorized. Otherwise, the NAF or AP rejects the service request of the UE. At this point, Ks_NAF* is not generated, and Ks_NAF* is not provided to the application server either.

Service process of the enhanced GBA system includes four stages: GBA initialization, bootstrapping, bootstrapping security associated use, and application security associated use. In the fourth stage, for an obtaining mode of the GBA application layer session key Ks_NAF*, two processing modes are supported: active pushing by NAF or AP, and active requesting by a server.

In an enhanced GBA process, the NAF or AP needs to make correct processing according to a stage of a current GBA process. For example, in the third stage, the NAF or AP needs to make a direct response to reception of a Hypertext Transfer Protocol (HTTP) message; and in the fourth stage, the NAF or AP needs to forward the HTTP message to the server for processing. However, in an actual testing process, it is found that HTTP request messages transmitted by the UE in the third and fourth stages are the same, at this point, the NAF or AP forwards all the received HTTP request messages to the server for processing, resulting in errors: first, the HTTP message forwarded by the NAF or AP to the server causes the server to handle it as an abnormality, return an HTTP 404 error response, and eventually lead to termination of the enhanced GBA service process in the third stage; second, the enhanced GBA mechanism is bypassed in a service authorization operation at the fourth stage, which brings about a security problem. It is to be noted that the same problem also exists under an Authentication and Key Management for Applications (AKMA) architecture.

### SUMMARY

An object of the embodiments of the present disclosure is to provide an identifier processing method and device and a computer readable storage medium, which can solve the problem of abnormal termination of a service process in an enhanced GBA process or AKMA process, in the related arts.

In a first aspect, one embodiment of the present disclosure provides an identifier processing method, performed by a first device, and the method includes: receiving a first message transmitted by a User Equipment (UE), the first message carrying a first identifier; if a first key is not found according to the first identifier, transmitting a second message to a second device to obtain the first key; and/or, if the first key is found according to the first identifier, transmitting a third message to a third device.

In some embodiments, the third message includes at least one of the following: the first identifier, the first key, a second key derived from the first key, information obtained by encrypting the first key, and information obtained by encrypting the second key.

In some embodiments, after transmitting the second message to the second device to obtain the first key, the method further includes: transmitting a fourth message to the UE.

In some embodiments, the fourth message is used to indicate that processing of the first message is successful, or the first device has successfully obtained the first key, or the first device has successfully obtained the first key and verification of the first message is successful; and/or, the fourth message is used to indicate that processing of the first message fails, or the first device fails to obtain the first key, or is used to indicate that the first device successfully obtains the first key but verification of the first message fails.

In some embodiments, the first device is a Network Application Function (NAF) network element or an Authentication Proxy (AP) network element, and the first identifier is a Bootstrapping-Transaction Identifier (B-TID); that if a first key is not found according to the first identifier, transmitting a second message to a second device to obtain the first key; and/or, if the first key is found according to the first identifier, transmitting a third message to a third device comprise(s): if the first key is not found according to the B-TID, determining a third stage that is in an enhanced Generic Bootstrapping Architecture (GBA) service process, then transmitting the second message to a Bootstrapping Server Function (BSF) network element to obtain the first key; and/or, if the first key is found according to the B-TID, determining a fourth stage that is in the enhanced GBA service process, then transmitting the third message to an application server.

In some embodiments, the first identifier is a Key Identifier (A-KID), that if a first key is not found according to the first identifier, transmitting a second message to a second device to obtain the first key; and/or, if the first key is found according to the first identifier, transmitting a third message to a third device comprise(s): if the first key is not found according to the A-KID, transmitting the second message to an Authentication and Key Management for Applications Anchor Function (AAnF) network element to obtain the first key; and/or, if the first key is found according to the A-KID, transmitting the third message to an Application Function (AF) network element or AS.

In some embodiments, the third message comprises the first identifier, and the method further includes: receiving a fifth message for requesting a key, transmitted by the third device; and transmitting a sixth message to the third device, the sixth message includes at least one of the following: the first key, a second key derived from the first key, information obtained by encrypting the first key, and information obtained by encrypting the second key.

A second aspect of the embodiments of the present disclosure provides a first device, including a processor and a transceiver, the transceiver being configured to receive and transmit data under the control of the processor, the processor being used to perform the following operation: receiving a first message transmitted by a UE, wherein the first message carries a first identifier; and if a first key is not found according to the first identifier, transmitting a second message to a second device to obtain the first key; and/or, if the first key is found according to the first identifier, transmitting a third message to a third device.

In some embodiments, the third message includes at least one of the following: the first identifier, the first key, a second key derived from the first key, information obtained by encrypting the first key, and information obtained by encrypting the second key.

In some embodiments, the processor is further used to perform the following process: transmitting a fourth message to a UE.

In some embodiments, the fourth message is used to indicate that processing of the first message is successful, or the first device has successfully obtained the first key, or the first device has successfully obtained the first key and verification of the first message is successful; and/or, the fourth message is used to indicate that processing of the first message fails, or the first device fails to obtain the first key, or is used to indicate that the first device successfully obtains the first key but verification of the first message fails.

In some embodiments, the first device is an NAF/AP, and the first identifier is a B-TID; if the first key is not found according to the B-TID, determining a third stage that is in an enhanced GBA service process, then transmitting the second message to a BSF network element to obtain the first key; and/or, if the first key is found according to the B-TID, determining a fourth stage that is in the enhanced GBA service process, then transmitting the third message to an application server.

In some embodiments, the first identifier is an A-KID, the processor is further used to: if the first key is not founbd according to the A-KID, transmit the second message to an AAnF network element to obtain the first key; and/or, if the first key is found according to the A-KID, transmit the third message to an AF network element or AS.

In some embodiments, the third message comprises the first identifier, and the processor is further used to: receive a fifth message for requesting a key, as transmitted by the third device; and transmit a sixth message to the third device, the sixth message includes at least one of the following: the first key, a second key derived from the first key, information obtained after the first key is encrypted, and information obtained after the second key is encrypted.

A third aspect of the embodiments of the present disclosure further provides a first device, comprising a memory, a processor and a program stored on the memory and capable of running on the processor, when the processor executes the program, the identifier processing method as described above is implemented.

A fourth aspect of the embodiments of the present disclosure further provides a computer readable storage medium, storing a computer program thereon, the program, when being executed by a processor, implements steps in the identifier processing method as described above.

The technical solution of the present disclosure at least has the following advantageous effect: in the identifier processing method, the device and the computer readable storage medium in the embodiments of the present disclosure, the first device queries the first key via the first identifier carried by the first message and takes corresponding processing according to whether the first device queries the first key or not, so as to indirectly determine a stage at which a current process is located, prevent a service authorization operation at a certain stage from being bypassed, and enhance security of an enhanced GBA system and/or AKMA system. And, the present disclosure can further avoid an enhanced GBA service process and/or AKMA service process from being terminated abnormally.

### BRIEF DESCRIPTION OF THE DRAWINGS

FIG. 1 is a step flow diagram of an identifier processing method according to an embodiment of the present disclosure;
FIG. 2 is a principle schematic diagram of a first example of an identifier processing method according to an embodiment of the present disclosure;
FIG. 3 is a principle schematic diagram of a second example 2 of an identifier processing method according to an embodiment of the present disclosure; and
FIG. 4 is a structure schematic diagram of a first device according to an embodiment of the present disclosure.

### DETAILED DESCRIPTION

To make the technical problem to be solved, the technical solution and advantages of the present disclosure clearer, a detailed description is provided hereinafter with reference to the drawings and the embodiments.

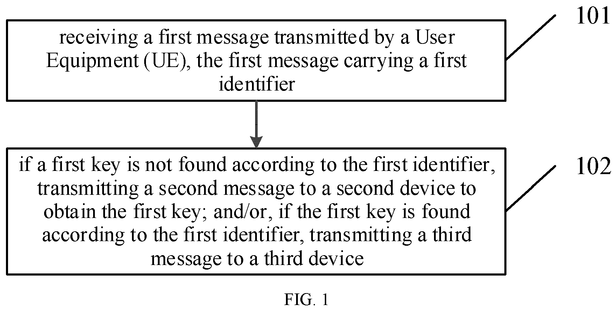

As shown in FIG. 1, one embodiment of the present disclosure provides an identifier processing method, performed by a first device, and the method includes the following steps 101-102.

Step 101: receiving a first message transmitted by a User Equipment (UE), where the first message carries a first identifier.

Optionally, the first message may be an HTTP message, or an HTTP request message, etc.

Step 102: if a first key is not found according to the first identifier, transmitting a second message to a second device to obtain the first key; and/or, if the first key is found according to the first identifier, transmitting a third message to a third device.

Optionally, if the first key is not found, it is determined that a current stage is a certain stage, and if the first key is found, it is determined that the current stage is another stage. In the embodiments of the present disclosure, when processing the first message of the UE, the first device is capable of determining a stage at which a current process is located according to whether the first key is found, and then adopts a corresponding processing mode. For example, the first device is capable of clearly distinguishing the third and fourth stages of GBA from a service perspective. In the third stage, the first device does not forward the first message of the UE to an application server. In the fourth stage, the first device actively pushes a key to the application server according to a pre-set mode of obtaining the key, or the application server actively requests to obtain the key from the first device.

Optionally, the identifier processing method provided by the embodiments of the present disclosure may have multiple implementations, among which two optional implementations are: an identifier processing method under GBA and an identifier processing method under AKMA.

As an optional embodiment, the third message includes at least one of the following: the first identifier, the first key, a second key derived from the first key, information obtained by encrypting the first key, and information obtained by encrypting the second key.

The first key may be a GBA session key Ks_NAF or Ks_(int/ext)_NAF, and the second key may be a GBA application layer session key Ks_NAF*.

Alternatively, the first key may also be KAKMA or KAF, and the second key may be a key derived from KAKMA or KAF.

In at least one embodiment of the present disclosure, after transmitting the second message to the second device to obtain the first key, the method further includes: transmitting a fourth message to the UE.

In at least one embodiment of the present disclosure, the fourth message is used to indicate that processing of the first message is successful, or the first device has successfully obtained the first key, or the first device has successfully obtained the first key and verification of the first message is successful; and/or, the fourth message is used to indicate that processing of the first message fails, or the first device fails to obtain the first key, or is used to indicate that the first device successfully obtains the first key but verification of the first message fails.

In at least one embodiment of the present disclosure, the first device is a Network Application Function (NAF) network element or an Authentication Proxy (AP) network element, and the first identifier is a Bootstrapping-Transaction Identifier (B-TID). Correspondingly, the step 102 includes:
if the first key is not found according to the B-TID, determining that is it at a third stage in an enhanced Generic Bootstrapping Architecture (GBA) service process, then transmitting a second message to a Bootstrapping Server Function (BSF) network element to obtain the first key; and/or,
if the first key is found according to the B-TID, determining that is is at a fourth stage in the enhanced GBA service process, then transmitting a third message to an application server.

According to the enhanced GBA service process, NAF/AP does not have a GBA session key Ks_(int/ext)_NAF in an initial state. In the third stage, after receiving an HTTP request message transmitted by the UE, in case of finding that there is no Ks_(int/ext)_NAF locally that is used to authenticate the HTTP request message, the NAF/AP requests to obtain Ks_(int/ext)_NAF from the BSF and then uses this key for HTTP digest authentication. In the fourth stage, after receiving an HTTP request message transmitted by the UE, in case of finding that there has been Ks_(int/ext)_NAF locally, the NAF/AP uses this key for HTTP digest authentication.

Therefore, the embodiments of the present disclosure determines a stage at which a current GBA authentication process is located by determining whether the GBA session key Ks_(int/ext)_NAF exists on the NAF/AP. After receiving the HTTP request message (i.e., the first message) transmitted by the UE, the NAF/AP first queries whether there is available Ks_(int/ext)_NAF locally according to B-TID information in the message. If there is no available Ks_(int/ext)_NAF,it is considered that the current process is in the third stage, then Ks_(int/ext)_NAF is requested to be obtained by interacting with the BSF via a BIR (Bootstrapping-Info-Answer)/BIA (Bootstrapping-Info-Request) message. If there is available Ks_(int/ext)_NAF, it is considered that the current process is in the fourth stage. Here, availability of Ks_(int/ext)_NAF refers to that the NAF/AP locally stores the Ks_(int/ext)_NAF and the key is within a valid survival period, rather than a key that has exceeded the survival period and becomes invalid. Then, the NAF/AP performs HTTP digest authentication on the HTTP request message based on Ks_(int/ext)_NAF. If the digest authentication for the HTTP request message is successful, processing in the third or fourth stage is performed according to the above determination result. If the digest authentication for the HTTP request message fails, an HTTP 401 message is retuned for requesting the UE to re-execute the GBA bootstrapping process to perform Authentication Key Agreement (AKA) identity authentication.

In another optional embodiment of the present disclosure, the first identifier is a key identifier (AKMA Key Identifier, A-KID), correspondingly, thestep 102 includes:
if the first key is not found according to the A-KID, transmitting the second message to an Authentication and Key Management for Applications (AKMA) Anchor Function (AAnF) network element to obtain the first key; and/or,
if the first key is found according to the A-KID, transmitting the third message to an Application Function (AF) network element or AS.

The first device may have multiple implementations. For example, the first device may be an AKMA Application Proxy (AAP), an AKMA Application Proxy (AKMA AP), an AKMA application proxy, an AS proxy, a proxy server, an AF proxy, etc., which are nor specifically limited here.

As an optional embodiment, in a case where the third message includes the first identifier, the method further includes: receiving a fifth message for requesting a key, transmitted by a third device;
transmitting a sixth message to the third device, where the sixth message includes at least one of the following: the first key, a second key derived from the first key, information obtained by encrypting the first key, and information obtained by encrypting the second key.

In the embodiments of the present disclosure, the first device queries the first key via the first identifier carried by the first message and takes corresponding processing according to whether the first device finds the first key or not, so as to indirectly determine a stage at which a current process is located, prevent a service authorization operation at a certain stage from being bypassed, and enhance security of an enhanced GBA system and/or AKMA system; and eliminate a HTTP 404 error response returned by an AS for abnormality handling, and avoid an enhanced GBA service process and/or AKMA service process from being terminated abnormally.

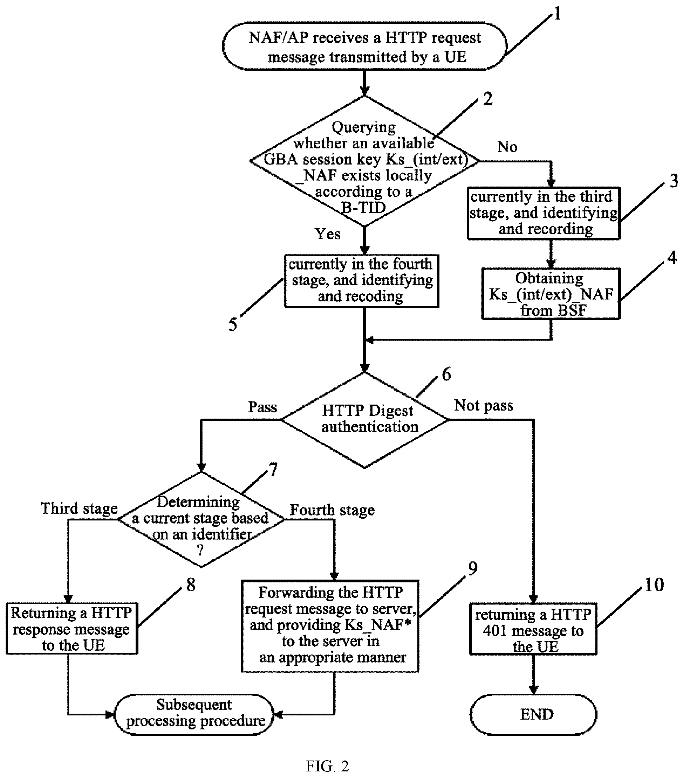

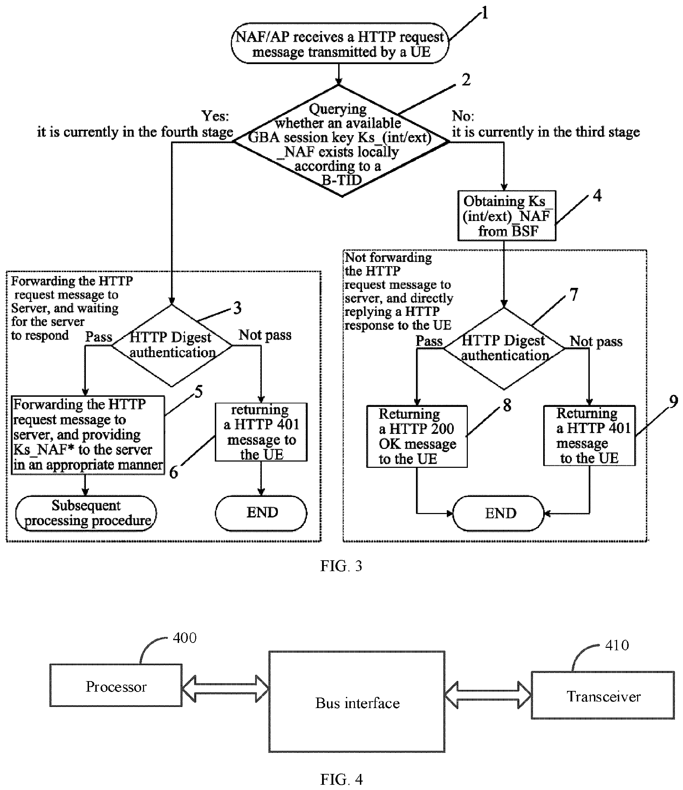

In order to describe the identifier processing method provided by the embodiments of the present disclosure more clearly, two examples by combining with the enhanced GBA authentication process are described below.
in a first example, NAF/AP may adopt a method with stage identification to determine a stage at which a current enhanced GBA process is located. When the method with stage identification is adopted, stage information may be recorded in different ways, for example, a marker is set to indicate being in the third stage, and a marker is not set to indicate being in the fourth stage; or, a mark is set as 0 to indicate being in the third stage, and a mark is set as 1 to indicate being in the fourth stage, and so on. Specific process is shown in FIG. 2:
   Step 1, receiving, by NAF or AP, a HTTP request message transmitted by a UE.
   Step 2, querying, by the NAF or AP, whether an available GBA session key Ks_(int/ext)_NAF exists locally according to a B-TID.
   Step 3, if available Ks_(int/ext)_NAF does not exist, determining that it is currently in the third stage, and performing identifier recording, proceeding to Step 4.
   Step 4, obtaining, by the NAF or AP, Ks_(int/ext)_NAF from BSF, and proceeds to Step 6.
   Step 5, if available Ks_(int/ext)_NAF exists, determining that it is currently in the fourth stage, and performing identifier recording, and proceeding to Step 6.
   Step 6, performing, by the NAF or AP, HTTP digest authentication.
   Step 7, if the authentication is successful, determining a current stage based on an identifier; if it is determined to be in the third stage, proceeding to Step 8; if it is determined to be in the fourth stage, proceeding to Step 9.
   Step 8, returning a HTTP response message to the UE.
   Step 9, forwarding the HTTP request message to an application server, and providing Ks_NAF* to the server in an appropriate manner.
   Step 10, if the authentication fails, returning a HTTP 401 message to the UE.
in a second example, NAF/AP may adopt a method without stage identification to determine a stage at which a current enhanced GBA process is located, specific process is shown in FIG. 3:
   Step 1, receiving, by NAF or AP, a HTTP request message transmitted by a UE.
   Step 2, querying, by the NAF or AP, whether an available GBA session key Ks_(int/ext)_NAF exists locally according to a B-TID.
   Step 3, if available Ks_(int/ext)_NAF exists, determining that it is currently in the fourth stage, performing HTTP digest authentication by the NAF or AP; and proceeding to Step 5 or Step 6.
   Step 4, if available Ks_(int/ext)_NAF does not exist, determining that it is currently in the third stage, obtaining Ks_(int/ext)_NAF from BSF, and proceeding to Step 7.
   Step 5, if the authentication is successful, forwarding the HTTP request message to an application server, and providing Ks_NAF* to the server in an appropriate manner.
   Step 6, if the authentication fails, returning a HTTP 401 message to the UE.
   Step 7, performing, by the NAF or AP, HTTP digest authentication.
   Step 8, if the authentication is successful, returning a HTTP 200 OK message to the UE.
   Step 9, if the authentication fails, returning a HTTP 401 message to the UE.

As shown in FIG. 4, one embodiment of the present disclosure further provides a first device, including a processor 400 and a transceiver 410. The transceiver 410 is used to receive and transmit data under the control of the processor 400, and the processor 400 is used to perform the following operation:
receiving a first message transmitted by a User Equipment (UE), where the first message carries a first identifier; and
if a first key is not found according to the first identifier, transmitting a second message to a second device to obtain the first key; and/or, if the first key is found according to the first identifier, transmitting a third message to a third device. As an optional embodiment, the third message includes at least one of the following: the first identifier, the first key, a second key derived from the first key, information obtained by encrypting the first key, and information obtained by encrypting the second key.

As an optional embodiment, the processor is further used to perform the following process: transmitting a fourth message to the UE.

As an optional embodiment, the fourth message is used to indicate that processing of the first message is successful, or the first device has successfully obtained the first key, or the first device has successfully obtained the first key and verification of the first message is successful; and/or, the fourth message is used to indicate that processing of the first message fails, or the first device fails to obtain the first key, or is used to indicate that the first device successfully obtains the first key but verification of the first message fails.

As an optional embodiment, the first device is an NAF/AP, and the first identifier is a B-TID; the processor is further used to:
if the first key is not found according to the B-TID, determine that the current stage is a third stage in an enhanced GBA service process, then transmit the second message to a BSF network element to obtain the first key; and/or, if the first key is found according to the B-TID, determine that the current stage is a fourth stage in the enhanced GBA service process, then transmit the third message to an application server.

As an optional embodiment, the first identifier is an A-KID, the processor is further used to: if the first key is not found according to the A-KID, transmit the second message to an AAnF network element to obtain the first key; and/or, if the first key is found according to the A-KID, transmit the third message to an AF network element or AS.

As an optional embodiment, the third message includes the first identifier, and the processor is further used to: receive a fifth message for requesting a key, transmitted by the third device; and transmit a sixth message to the third device, where the sixth message includes at least one of the following: the first key, a second key derived from the first key, information obtained by encrypting the first key, and information obtained by encrypting the second key.

In the embodiments of the present disclosure, the first device queries the first key via the first identifier carried by the first message and takes corresponding processing according to whether the first device found the first key or not, so as to indirectly determine a stage at which a current process is located, prevent a service authorization operation at a certain stage from being bypassed, and enhance security of an enhanced GBA system and/or AKMA system; and eliminate a HTTP 404 error response returned by a service server for abnormality handling, and avoid an enhanced GBA service process and/or AKMA service process from being terminated abnormally.

It is to be noted that the first device provided by the embodiments of the present disclosure is a device capable of performing the above-mentioned identifier processing method, and all embodiments of the above-mentioned identifier processing method are applicable to this device and can achieve the same or similar advantageous effect, which are not repeated here.

One embodiment of the present disclosure further provides a first device, including a memory, a processor and a computer program stored on the memory and capable of running on the processor. When the processor executes the program, each process in the embodiments of the identifier processing method as described above is implemented, and the same technical effect can be reached. To avoid repetition, repeated description is not made here.

It should be understood that the processor in the embodiments of the present disclosure may be an integrated circuit chip, having a capacity of processing a signal. During an implementation process, each step in the above-mentioned method embodiments may be accomplished via an integrated logic circuit of hardware in the processor or instructions in software form. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. It may implement or perform each method, step and logical block diagram disclosed in the embodiments of the present disclosure. The general-purpose processor may be a microprocessor or may further be any conventional processor, etc. In conjunction with the steps of the method disclosed in the embodiments of the present disclosure, it may be directly reflected as completion of execution by a hardware decoding processor, or completion of execution by a combination of hardware and software modules in the decoding processor. A software module may be located in a mature storage medium in this field, such as a random access memory, a flash memory, a read-only memory, a programmable read-only memory or an electrically rewritable programmable memory, a register, etc. The storage medium is located in a memory, a processor reads information in the memory, and the steps of the above-mentioned method are completed in combination with its hardware.

It is understandable that the memory in the embodiments of the present disclosure may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), which is used as an external cache. Through exemplary but not restrictive descriptions, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory described herein is intended to include but not be limited to these and any other suitable types of memories.

It should be understood that the above-mentioned memories are exemplary but not restrictive descriptions, for example the memory in the embodiments of the present disclosure may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM), etc. That is to say, the memory in the embodiments of the present disclosure is intended to include but not be limited to these and any other suitable types of memories.

One embodiment of the present disclosure further provides a computer readable storage medium, storing a computer program thereon. When the program is executed by a processor, each process in the embodiments of the identifier processing method as described above is implemented, and the same technical effect can be reached. To avoid repetition, repeated description is not made here. The computer readable storage medium, may be, such as a Read-Only Memory (ROM for short), a Random Access Memory (RAM for short), a floppy disk or an optical disk, etc.

Those skilled in the art should understand that the embodiments of the present disclosure may be provided as methods, systems or computer program products. Therefore, the present disclosure may take the form of full hardware embodiments, full software embodiments, or embodiments combining software and hardware aspects. And, the present disclosure may take the form of a computer program product implemented on one or more computer readable storage mediums (including but not limited to a disk memory and an optical memory, etc.) in which computer available program codes are contained.

The present disclosure is described by reference to flow diagrams and/or block diagrams of methods, devices (systems) and computer program products in the embodiments of the present disclosure. It should be understood that each process and/or block in a flow diagram and/or block diagram as well as a combination of processes and/or blocks in a flow diagram and/or block diagram is/are implemented by computer program instructions. These computer program instructions may be provided to a processor of a general-purpose computer, a special-purpose computer, an embedded processing machine or other programmable data processing device to produce a machine, so that instructions executed by a processor of a computer or other programmable data processing device produce a device for implementing a function specified in one or more flows in a flow diagram and/or in one or more blocks.

These computer program instructions may also be stored in a computer readable storage medium capable of directing a computer or other programmable data processing device to work in a particular manner, so that the instructions stored in such computer readable storage medium produce a paper product including an instruction apparatus, the instruction apparatus implements a function specified in one or more flows in a flow diagram and/or in one or more blocks in a block diagram.

These computer program instructions may also be loaded onto a computer or other programmable data processing device, so that a series of operational steps are performed on the computer or other programmable device to produce computer-implemented processing, thereby the instructions executed on the computer or other programmable device provide steps for implementing a function specified in one or more flows in a flow diagram and/or in one or more blocks in a block diagram.

The above descriptions are preferred implementations of the present disclosure. It should be pointed out that for those skilled in the art, several improvements and refinements may be made without departing from the principle described in the present disclosure, and these improvements and refinements should also be regarded as falling within the protection scope of the present disclosure.

## Claims

1. An identifier processing method performed by a first device, comprising:
receiving a first message transmitted by a User Equipment (UE), wherein the first message carries a first identifier;
if a first key is not found according to the first identifier, transmitting a second message to a second device to obtain the first key; and/or, if the first key is found according to the first identifier, transmitting a third message to a third device.

2. The method according to claim 1, wherein the third message includes at least one of the following: the first identifier, the first key, a second key derived from the first key, information obtained by encrypting the first key, and information obtained by encrypting the second key.

3. The method according to claim 1, wherein after transmitting the second message to the second device to obtain the first key, the method further comprises:
transmitting a fourth message to the UE.

4. The method according to claim 3, wherein the fourth message is used to indicate that processing of the first message is successful, or the first device has successfully obtained the first key, or the first device has successfully obtained the first key and verification of the first message is successful; and/or,
the fourth message is used to indicate that processing of the first message fails, or the first device fails to obtain the first key, or is used to indicate that the first device successfully obtains the first key but verification of the first message fails.

5. The method according to claim 1, wherein the first device is a Network Application Function (NAF) network element or an Authentication Proxy (AP) network element, and the first identifier is a Bootstrapping-Transaction Identifier (B-TID);
that if a first key is not found according to the first identifier, transmitting a second message to a second device to obtain the first key; and/or, if the first key is found according to the first identifier, transmitting a third message to a third device, comprises:
if the first key is not found according to the B-TID, determining at a third stage in an enhanced Generic Bootstrapping Architecture (GBA) service process, and transmitting the second message to a Bootstrapping Server Function (BSF) network element to obtain the first key; and/or, if the first key is found according to the B-TID, determining at a fourth stage in the enhanced GBA service process, then transmitting the third message to an application server.

6. The method according to claim 1, wherein the first identifier is an Authentication and Key Management for Applications (AKMA)-Key Identifier (A-KID),
that if a first key is not found according to the first identifier, transmitting a second message to a second device to obtain the first key; and/or, if the first key is found according to the first identifier, transmitting a third message to a third device comprises:
if the first key is not found according to the A-KID, transmitting the second message to an AKMAAnchor Function (AAnF) network element to obtain the first key; and/or, if the first key is found according to the A-KID, transmitting the third message to an Application Function (AF) network element or Application Server (AS).

7. The method according to claim 2, wherein the third message comprises the first identifier, and the method further comprises:
receiving a fifth message for requesting a key, transmitted by the third device; and
transmitting a sixth message to the third device, wherein the sixth message includes at least one of the following: the first key, a second key derived from the first key, information obtained by encrypting the first key, and information obtained by encrypting the second key.

8. A first device, comprising: a processor and a transceiver; wherein the transceiver is configured to receive and transmit data under the control of the processor, and the processor is used to perform following operations:
receiving a first message transmitted by a User Equipment (UE), wherein the first message carries a first identifier; and
if a first key is not found according to the first identifier, transmitting a second message to a second device to obtain the first key; and/or, if the first key is found according to the first identifier, transmitting a third message to a third device.

9. The device according to claim 8, wherein the third message includes at least one of the following: the first identifier, the first key, a second key derived from the first key, information obtained by encrypting the first key, and information obtained by encrypting the second key.

10. The device according to claim 8, wherein the processor is further used to perform the following process: transmitting a fourth message to a UE.

11. The device according to claim 10, wherein the fourth message is used to indicate that processing of the first message is successful, or the first device has successfully obtained the first key, or the first device has successfully obtained the first key and verification of the first message is successful; and/or,
the fourth message is used to indicate that processing of the first message fails, or the first device fails to obtain the first key, or is used to indicate that the first device successfully obtains the first key but verification of the first message fails.

12. The device according to claim 8, wherein the first device is a Network Application Function (NAF) network element or an Authentication Proxy (AP) network element, and the first identifier is a Bootstrapping-Transaction Identifier (B-TID);
the processor is further used to:
if the first key is not found according to the B-TID, determine at a third stage in an enhanced Generic Bootstrapping Architecture (GBA) service process, then transmit the second message to a Bootstrapping Server Function (BSF) network element to obtain the first key; and/or,
if the first key is found according to the B-TID, determine at a fourth stage in the enhanced GBA service process, then transmit the third message to an application server.

13. The device according to claim 8, wherein the first identifier is an Authentication and Key Management for Applications (AKMA)-Key Identifier (A-KID), and the processor is further used to:
if the first key is not found according to the A-KID, transmit the second message to an AKMA Anchor Function (AAnF) network element to obtain the first key; and/or,
if the first key is found according to the A-KID, transmit the third message to an Application Function (AF) network element or Application Server (AS).

14. The device according to claim 9, wherein the third message comprises the first identifier, and the processor is further used to:
receive a fifth message for requesting a key, transmitted by the third device; and
transmit a sixth message to the third device, wherein the sixth message includes at least one of the following: the first key, a second key derived from the first key, information obtained by encrypting the first key, and information obtained by encrypting the second key.

15. A first device, comprising a memory, a processor and a program stored on the memory and capable of running on the processor; wherein when the processor executes the program, the identifier processing method according to any one of claims 1 to 7 is implemented.

16. A computer readable storage medium, comprising a computer program stored thereon; wherein the program, when executed by a processor, implements steps in the identifier processing method according to any one of claims 1 to 7.

17. A computer program product comprising an instruction, wherein the instruction, when executed by a processor, causes the processor to perform steps in the identifier processing method according to any one of claims 1 to 7.
